# EUROPEAN PATENT SPECIFICATION

(11) **EP 2 629 487 B1**
(45) Date of publication and mention of the grant of the patent: **04.11.2015**
(21) Application number: 12155927.2
(22) Date of filing: 17.02.2012
(51) Int. Cl.: H04L 29/08, H04L 12/24, G06Q 30/06

(54) **Method and system for distributing one or more server-based services**
Verfahren und System zur Verteilung von einem oder mehreren serverbasierten Diensten
Procédé et système de distribution d'un ou plusieurs services basés sur un serveur

(43) Date of publication of application: 21.08.2013
(73) Proprietor: BlackBerry Limited, Waterloo, ON N2K 0A7 (CA)
(72) Inventor: Colbert, Michael Scott, Debary, FL Florida 32713 (US); Gupta, Vivek, Irving, TX Texas 75039 (US)
(74) Representative: Moore, Barry

(56) References cited:
- US-A1- 2004 034 853
- US-A1- 2007 198 360
- US-A1- 2011 010 759
- Research In Motion Limited: "BlackBerry App World storefrontVendor portal, Administration Guide", , vol. Version: 2.0 31 December 2010 (2010-12-31), 31 December 2010 (2010-12-31), XP002674931, Retrieved from the Internet: URL:http://web.archive.org/web/20100603043 819/http://docs.blackberry.com/en/develope rs/deliverables/15522/BlackBerry_App_World _storefront-Administration_Guide--1086301- 0409112053-001-2.0-US.pdf [retrieved on 2012-04-27]

## Description

### FIELD

Example embodiments relate to distributing one or more server-based services, and in particular to a system and method to facilitate development, distribution, and monetization of one or more server-based services.

### BACKGROUND

Mobile applications often utilize one or more server-based services. A server-based service ("SBS") can be, for example, a location based service to determine weather, news feeds, billing service to manage transactions for an application, etc. US Patent Application Publication US2004/0034853, for example, discloses a mobile downloadsystem, in which applications are submitted by developers and users can select and download applications for use on their mobile devices. Often application developers are forced to develop SBSs to meet the needs of their application, because there is no efficient way to determine if a similar SBS has been created, and if so, purchase or license that SBS.

Moreover, a server-based service ("SBS") developer has little visibility of what SBSs have been created by other SBS developers. Thus, an SBS developer can find themselves expending company resources creating a SBS and unintentionally duplicate an existing SBS that was developed by a different SBS developer.

Additionally, SBS developers generally sell or license their SBSs independent from other SBS developers. Without a centralized distribution platform, SBSs can be at a disadvantage in selling or licensing their SBSs to other SBS developers and application developers. Accordingly there is provided a method, system and computer-readable storage medium as detailed in the independent claims. Advantageous features are provided in the dependent claims.

### BRIEF DESCRIPTION OF THE DRAWINGS

Reference will now be made to the accompanying drawings showing example embodiments of the present application, and in which:
**Figure 1** shows, in block diagram form, an example system utilizing a service development platform;
**Figure 2** is a block diagram depicting example service development platform for development, distribution, and monetization of service development catalogs;
**Figure 3** illustrates an example service distribution graphical user interface;
**Figure 4** illustrates an example selected service distribution graphical user interface;
**Figure 5** illustrates an example server-based service upload graphical user interface; and
**Figure 6** shows a flowchart representing an example method performed on a service development platform for developing, distributing, and monetizing one or more server-based services;
**Figure 7** shows a flowchart representing an example method, performed on a service development platform, for providing one or more server-based services including a requested server-based service to a client device;
**Figure 8** shows a flowchart representing an example method performed on a client device in communication with a service development platform for developing, distributing and monetizing one or more server-based services; and
**Figure 9** shows a flowchart representing an example method, performed on a client device, for acquiring one or more server-based services including a requested server-based service.

### DESCRIPTION OF EXAMPLE EMBODIMENTS

The example embodiments provided below describe a service development platform that facilitates development, distribution, and monetization of server-based services. The service development platform provides a central hub for server-based service developers to determine what server-based services are available, and based on what server-based services are available make decisions concerning future server-based service development. Additionally, the service development platform provides a central forum for the server-based service developers to sell their respective server-based services. Moreover, the service development platform can act as a central hub for application developers looking to purchase one or more server-based services to be utilized by their applications (for example, a location based weather service that could be integrated into a weather app on a mobile phone).

In some example embodiments, the service development platform acquires server-based service data associated with a first server-based service, and parses the server-based service data. The service development platform catalogs the parsed server-based service data into a server-based service catalog that contains one or more server-based services different from the first server-based service. Additionally, the service development platform receives a request from an application developer for the first server-based service contained in the server-based service catalog, and provides the first server-based service to the application developer.

In some example embodiments, service development platform utilizes one or more graphical user interfaces to interact with a user. The graphical user interfaces can, for example, be used for displaying one or more server-based services, uploading server-based services to service development platform, selecting one or more server-based services for purchase, etc.

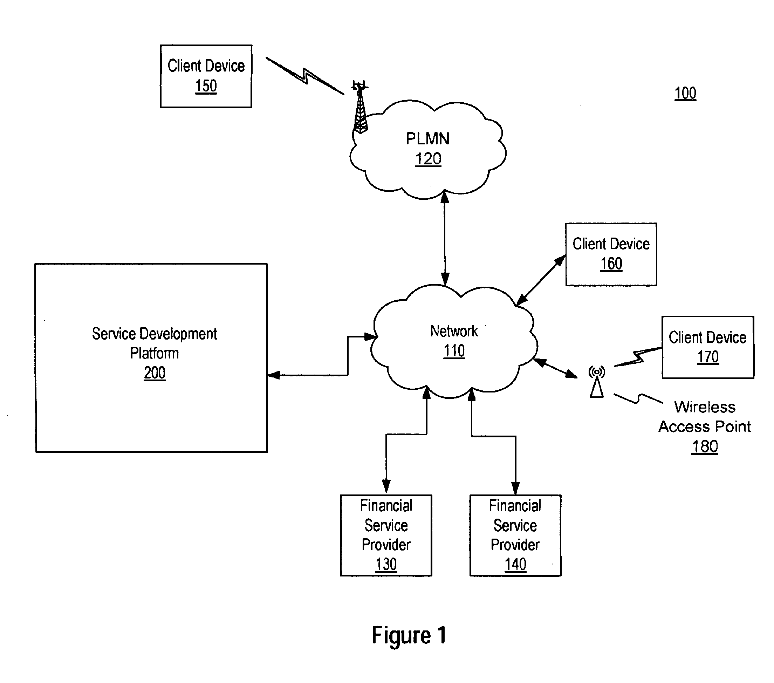

Reference is now made to **Figure 1****,** which shows, in block diagram form, an example system utilizing a service development platform for developing, distributing, and monetizing server-based services (SBSs), generally designated 100. System 100 can include a network 110, a public land mobile network (PLMN) 120, one or more financial service providers 130 and 140, client devices 150, 160, and 170, a wireless access point 180, and a service development platform 200.

Network 110 can be, for example, the Internet, an intranet, a local area network, a wide area network, a campus area network, a metropolitan area network, an extranet, a private extranet, any set of two or more coupled electronic devices, or a combination of any of these or other appropriate networks. Network 110 can also communicate with PLMN 120, which is also referred to as a wireless wide area network (WWAN) or, in some cases, a cellular network.

System 100 can include a number of financial service providers, for example, financial service providers 130 and 140. Financial service providers 130 and 140 can be banks (e.g., BANK of AMERICA), credit card companies (e.g., VISA, AMERICAN EXPRESS, etc.), financial intermediaries (e.g., PAYPAL), or some other organization that users pay for requested SBSs. For example, service development platform 200 can bill a user of client device 150 for downloading a particular server-based service, and can elect to receive payment from financial service provider 130.

System 100 can include a number of client devices, for example, client devices 150, 160, and 170. Client devices 150, 160, and 170 can be, for example, smartphones, tablets, netbooks, desktop computers, and laptop computers. One or more client devices 150, 160, and 170, can be coupled to the service development platform 200, via the network 110. In some embodiments not shown one or more client devices 150, 160, and 170 are directly coupled to service development platform 200. Client devices 150, 160, and 170 can include devices equipped for cellular communication through PLMN 120, devices equipped for Wi-Fi communications using wireless access point 180, or dual-mode devices capable of both cellular and communications using network 110, or any combination thereof Wireless access point 180 can be configured to WLANs that operate in accordance with one of the IEEE 802.11 specifications. For example, client device 170 is coupled wirelessly to network 110 using wireless access point 180, and client device 150 is coupled to network 110 via PLMN 120. Client devices 150, 160, and 170, can be equipped for Wi-Fi communications.

Client devices 150, 160, and 170 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magnetooptical), a DVD-ROM (digital versatile disk-read only memory), a DVD RAM (digital versatile disk-random access memory), or a semiconductor memory. Alternatively, the methods can be implemented in hardware components or combinations of hardware and software such as, for example, ASICs, special purpose computers, or general purpose computers. While portions of the specification only refer to one client device 150, 160, and 170, this is for simplification purposes only and, unless noted otherwise, is not meant to limit the described embodiments in any way.

Service development platform 200 can include one or more processors (not shown), a memory (not shown), and a data interface (not shown). The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magnetooptical), a DVD-ROM (digital versatile disk-read only memory), a DVD RAM (digital versatile disk-random access memory), or a semiconductor memory. Alternatively, the methods can be implemented in hardware components or combinations of hardware and software such as, for example, ASICs, special purpose computers, or general purpose computers. Service development platform 200 can be implemented on a single computer, or in some instances be distributed across a plurality of computers. In some embodiments not shown, portions of service development platform 200 can operate on one or more of client devices 150, 160, and 170. Service development platform 200 can be coupled to one or more of client devices 150, 160, and 170 via network 110. In some embodiments not shown, service development platform 200 is directly coupled to one or more client devices 150, 160, and 170. Additionally, development platform 200 can be coupled to one or more financial service providers 130 and 140 via network 110.

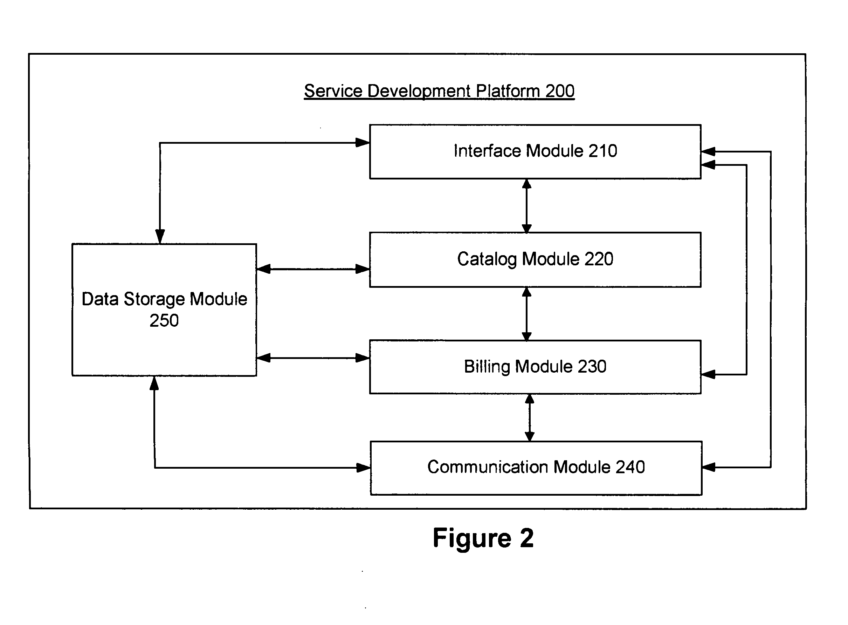

**Figure 2** is a block diagram depicting example service development platform 200. As illustrated, service development platform 200 includes an interface module 210, a catalog module 220, a billing module 230, a communication module 240, and a data storage module 250. It is appreciated that one or more of these modules can be deleted, modified, or combined together with other modules.

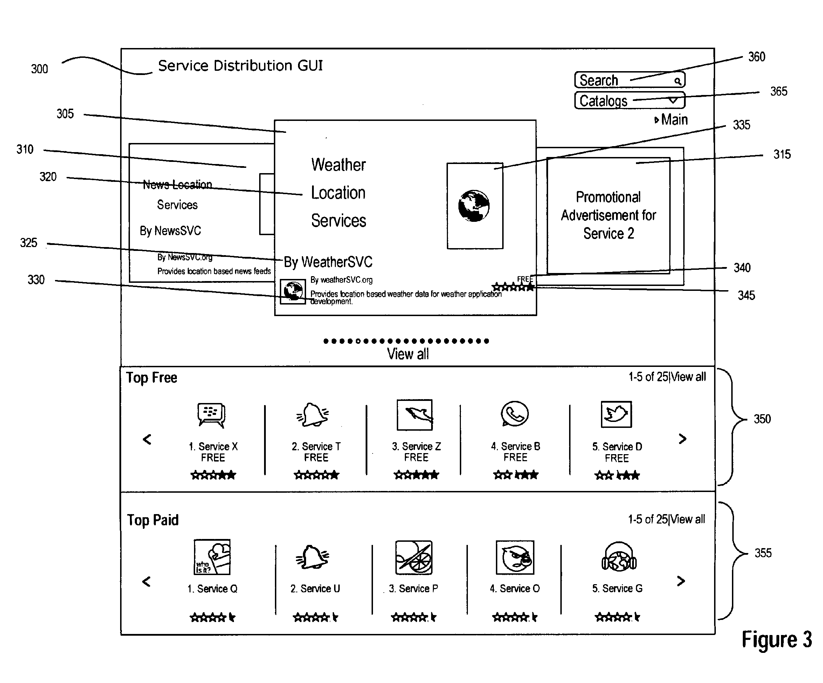

Interface module 210 displays graphical user interfaces (GUIs) allowing a user of a client device (for example, client devices 150, 160, and 170) to interface with service development platform 200. Interface module 210 can display a service distribution GUI that displays one or more SBSs available to download from service development platform 200. SBSs can include location based services, communication services, fixed mobile convergence services, device management services, etc., or any combination thereof. **Figure 3** illustrates an example service distribution GUI 300 generated by service development platform 200. Service distribution GUI 300 displays one or more featured SBSs 305, 310, and 315. Featured SBS are part of an SBS catalog maintained by service development platform 200. The SBS catalog is a searchable collection of SBSs compiled by service development platform 200. The SBSs within the SBS catalog can be indexed, for example, by platform (.NET platform, J2EE, etc.), by type of SBS service, by title, by SBS provider, by price, by license associated with the SBS, by ranking, by recommended SBSs, by related SBSs, etc. Additionally, in some embodiments, one or more of the featured SBSs can be a promotional advertisement, for example, featured service 315. Featured SBSs can include an SBS name 320, a name of the SBS provider 325, short SBS description 330, an SBS icon 335, an SBS price 340, an SBS rating 345, or some combination thereof Service distribution GUI 300 can also display a listing of the top free SBSs 350, top paid SBSs 355, or both. In some embodiments, top free SBSs 350 and top paid SBSs 355 can include one or more of the SBSs that are the most downloaded. Alternatively, top free SBSs 350 and top paid 355 can include one or more of the SBSs that have the highest user reviews. The SBSs displayed in top free SBSs 350 and top paid SBSs 355 are part of the SBS catalog. Additionally, in some embodiments, service distribution GUI 300 can include a search field 360. Search field 360 allows a user to enter one or more search terms. Service development platform 200 is configured to reference the SBS catalog using the entered search terms and to provide one or more results to the client device based on the SBS data referenced in the SBS catalog. For example, if a user enters "location based weather service" into search field 360, service development platform 200 could return one or more location based weather services that are indexed in the SBS catalog, for example, featured service 305. Additionally, service distribution GUI 300 can include a catalog button 365. When selected catalog button 365 can open a menu (not shown) illustrating one or more categories that that the user can search. The SBS catalog can include categories like, for example, location based services, news services, fixed mobile convergence services, device management services, etc., etc.

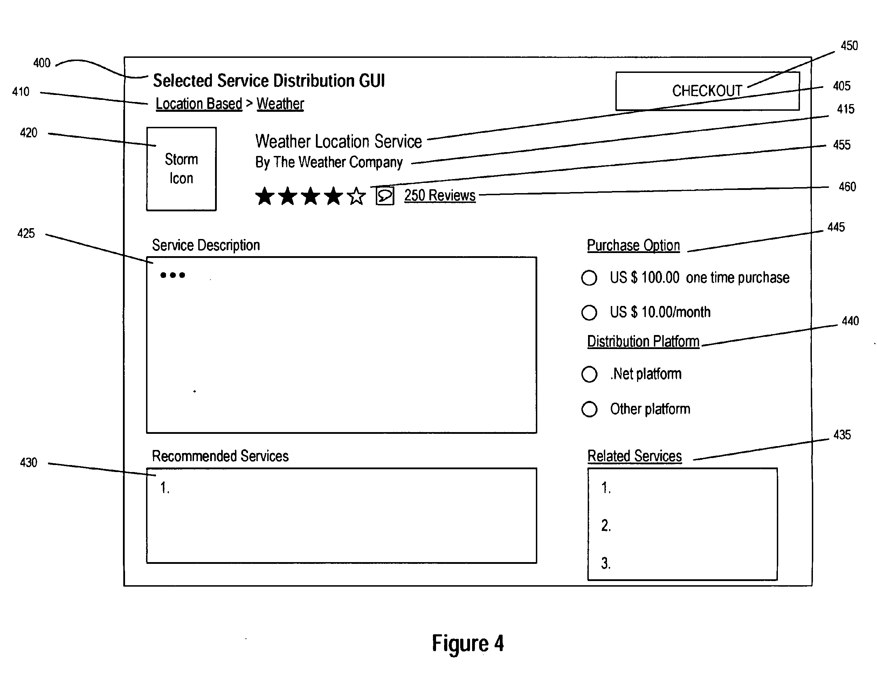

After a specific server-based service is selected using service distribution GUI 300, interface module 210 can display information related to the selected server-based service via a selected service distribution GUI. **Figure 4** illustrates an example selected service distribution GUI 400 generated by interface module 210. Selected service distribution GUI 400 can display an SBS name 405, category path 410, an SBS provider 415, an SBS icon 420, an SBS description 425, a recommended SBS section 430, a related SBS section 435, a distribution platform section 440, a purchase option section 445, a checkout button 450, a ranking value 455, a review link 460, or some combination thereof.

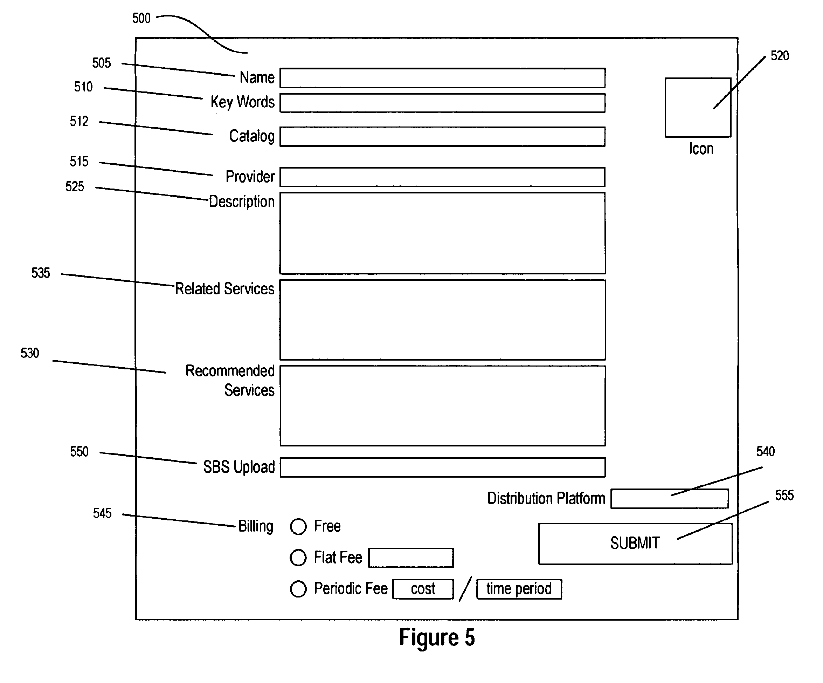

SBS name 405 corresponds to the name associated with the selected SBS, for example, "Weather Location Service." Category path 410 displays the location of the selected SBS within the SBS catalog maintained by service development platform 200. For example, the "Weather Location Service" is located within the "Location Based" services category in the SBS catalog, and specifically, within a subcategory relating to "Weather" services. In some embodiments, SBS name 405 corresponds to the data entered into an SBS name input field 505 described below with respect to **Figure 5****.**

SBS provider 415 can correspond to the name of the entity that is providing the SBS, the developer of the service, the owner of the service, etc. In this example, "Weather Location Service" is provided by "The Weather Company." In some embodiments, SBS provider 415 corresponds to the data entered into an SBS provider input field 515 described below with respect to **Figure 5****.**

SBS icon 420 is an icon associated with the selected SBS. In some embodiments, the entity who uploaded the service to service distribution platform 200 chooses the icon. In other embodiments, service distribution platform 200 selects an icon to be associated with the SBS. In some embodiments, SBS icon 420 corresponds to the icon uploaded into an SBS icon input field 520 described below with respect to **Figure 5****.**

SBS description section 420 can include a textual description of the selected SBS. For example, SBS description section 420 can include information relating to functionality of the service, key points relating to the SBS, suggested uses for the SBS, real time status information, links to other related information, types of platform it can deployed on, other dependent SBS, etc. In some embodiments, SBS description section 420 corresponds to the data entered into an SBS description input field 525 described below with respect to **Figure 5****.**

Some SBSs operate only in conjunction with one or more different SBSs. For example, a weather SBS can require one or more SBSs relating to humidity, sunrise and sunset, visibility estimates, etc. Selected service distribution GUI 400 includes recommended SBS section 430 that displays any SBSs that are recommended for use with the selected SBS. Interface module 210 can determine if any SBS are recommend for use with the selected SBS, for example, by referencing the SBS data associated with the selected SBS in the SBS catalog. In **Figure 4****,** the Weather Location Service has no recommended services. In some embodiments, not shown, interface module 210 automatically adds a purchase option that includes purchase information of both the selected server-based service and any server-based service displayed in recommended SBS section 430. In some embodiments, the user is prompted to purchase any recommended SBSs on checkout. In some embodiments, recommended SBS section 430 corresponds to the data entered into a recommended service input field 530 described below with respect to **Figure 5****.**

Additionally, selected service distribution GUI 400 can display one or more related SBSs in related SBS section 435. Related SBSs are those that service development platform 200 indicates the user would be interested in based in part on the type of selected SBS being viewed. The related SBSs can automatically be determined by service development platform 200. For example, service development platform 200 can analyze purchase history data to determine other SBSs that are generally purchased by users who purchase the selected SBS being viewed, and then display these other SBSs in related SBS section 435. In some embodiments, service development platform 200 determines related SBSs by listing other SBSs that perform similar functionality, by listing other SBSs within the same category, by listing other SBSs developed by the same SBS provider of the selected SBS, etc. In some embodiments, related SBS section 435 corresponds to the data entered into a related SBS input field 535 described below with respect to **Figure 5****.**

SBSs are generally configured to operate on specific platforms such as J2EE based platform or .Net platform but can be made generic too to run on any open source or proprietary platform. Selected service distribution GUI 400 can include distribution platform section 440. Distribution platform section 440 displays one or more platforms on which the selected SBS can operate. For example, the Weather Location Service in **Figure 4** can be purchased to operate on either on a .NET platform or some other platform (for example, J2EE, etc.). For SBSs that only operate on a single platform, selected service distribution GUI 400 automatically selects the distribution platform displayed in distribution platform section 440. In some embodiments, distribution platform section 440 corresponds to the data entered into a distribution platform input field 540 described below with respect to **Figure 5****.**

Selected service distribution GUI 400 can also include purchase option section 445. Purchase option section 445 can include one or more purchase options associated with the selected SBS. Purchase options can include, for example, a onetime fee, a per use fee, period billing, a per license fee, and free download, or some combination thereof The onetime fee is a fee that the user is charged only once, to obtain access to the selected SBS. Period billing is a fee type where the user is charged for use of the selected SBS at periodic intervals, for example, daily, monthly, annually, etc. The per use fee is a fee that the user is charged every time the selected SBS is used. The per license fee is a fee associated with the number of licenses sought for the particular service. Free download allows the user to receive the service without having to pay a fee. In some embodiments, purchase option section 445 corresponds to the data entered into a purchase option input field 545 described below with respect to **Figure 5****.**

In some embodiments, each of the purchase options presented to the user will have an associated license. In some embodiments, the license can be the same for each purchase option. In alternate embodiments, when a plurality of purchase options are displayed each purchase options can have different licensing restrictions. For example, the license associated with a free download can be different with the license associated with a monthly fee.

Once a purchase option and distribution platform are selected, a user can select checkout button 450. After checkout button 450 is selected, interface module 210 displays to the user a checkout GUI (not shown) that allows the user to confirm the purchase information, enter billing information, and provide other information needed to complete the transaction.

In some embodiments, selected service distribution GUI 400 can include a ranking value 455. A predetermined time after a selected SBS is purchased, service development platform 200 can be configured to automatically contact (for example, send an email) the purchaser of the selected SBS and ask them to provide a review. In this embodiment, ranking value 455 is based on one or more reviews of the selected SBS. Selected service distribution GUI 400 can also display a review link 460 to one or more reviews associated with ranking value 455. Review link 460 can be text based or be an icon. In this embodiment, review link 460 is text based and indicates the total number of reviews. After a user selects review link 460, service distribution platform 200 is configured to display a GUI (not shown) listing one or more reviews associated with the selected SBS.

In some embodiments, service distribution platform 200 can be configured to act as a central hub to distribute one or more SBSs to other service developers and to application developers. For example, a server-based service (SBS) developer can upload and make for sale a news feed SBS to service distribution platform 200. Interface module 210 is additionally configured to display an SBS upload GUI to facilitate uploading SBS data to the SBS catalog. Figure 5 illustrates an example SBS upload GUI 500 generated by interface module 210. SBS upload GUI 500 can display an SBS name input field 505, a key word input field 510, a suggested catalog location input field 512, an SBS provider input field 515, an icon input field 520, an SBS description input field 525, a recommended SBS input field 530, a related SBS input field 535, a distribution platform input field 540, a purchase option input field 545, an SBS upload input field 550, an submit button 555, or some combination thereof.

The user can enter a name of the SBS (for example, Weather Location Service) into SBS name input field 505. Likewise, the user can enter a company name (for example, The Weather Company) to be affiliated with the SBS being uploaded into SBS provider input field 515. In some embodiments (not shown), SBS provider input field 515 can contain one or more sub-fields for company contact information. Additionally, the user using icon input field 520 can upload an icon to be affiliated with the SBS to be uploaded.

The user can additionally enter one or more key words into key word input field 510. After the SBS has been uploaded into service distribution platform 200, the data entered into key word input field 510 is linked to the SBS that was uploaded. Such that a search performed by a user (for example, using search field 360) using one or more of the entered key words can cause service distribution platform 200 to display the uploaded SBS as one of the results.

Additionally, the user can enter a suggested SBS catalog location using suggested catalog location input field 512. In some embodiments, this is a drop down menu displaying the list of available categories in the SBS catalog which the SBS to be uploaded can potentially be associated with. Categories can include, for example, mobile services, location based services, fixed mobile convergence services, device management services, etc. A specific category -subcategory combination references a particular location within the SBS catalog. Additionally, within each category, there can be one or more subcategories, and within each subcategory there can be one or more additional subcategories, and so on, until an adequate level of description is reached. For example, within the SBS catalog there can be a location based services category, and within this category there can be a weather related subcategory, a news related subcategory, etc. Additionally, in some embodiments, a SBS being uploaded can be associated with a plurality of categories, subcategories, or some combination thereof.

The user can additionally enter a description of the SBS to be uploaded using SBS description input field 525. For example, SBS description input field 525 can include information relating to functionality of the service, key points relating to the SBS, suggested uses for the SBS, real time status information, links to other related information, types of platform it can deployed on, other dependent SBS, etc.

As discussed above, some SBSs operate potentially only in conjunction with one or more different SBSs. SBS upload GUI 500 includes recommended SBS input field 530 for any SBSs that the SBS to be uploaded potentially needs for operation. The user can enter any SBSs that are recommended for use with the SBS to be uploaded.

Additionally, in some embodiments, SBS upload GUI 500 is configured to include related SBS input field 535. The user can enter one or more related SBSs into related SBS input field 535. In embodiments not shown, any related SBS are automatically determined by service distribution platform 200 and not by the user. For example, service development platform 200 can be configured to analyze purchase history data to determine other SBSs that are generally purchased by users who purchase the selected SBS being viewed. In some embodiments, service development platform 200 is configured to determine related SBSs by listing other SBSs that perform similar functionality, by listing other SBSs within the same catalog, by listing other SBSs developed by the same developer of the selected SBS, etc.

The user can enter different platforms that the SBS to be uploaded is configured to operate with using distribution platform input 540. As discussed above, SBSs are generally configured to operate on specific platforms such as J2EE based platform or .Net platform but can be made generic too to run on any open source or proprietary platform. In some embodiments not shown, distribution platform input 540 contains one or more subfields specific to different operating systems, such that the user only has to select the appropriate operating system.

The user can select a pricing strategy using purchase option input field 545. Purchase option input field 545 can include one or more purchase options associated with the SBS to be uploaded. Purchase options can include, for example, a onetime fee, a per use fee, period billing, a per license fee, and free download, or some combination thereof. The onetime fee is a fee that the user is charged only once, to obtain access to the SBS. Period billing is a fee type where the user is charged for use of the SBS at periodic intervals, for example, daily, monthly, annually, etc. The per use fee is a fee that the user is charged every time the SBS is used. The per license fee is a fee associated with the number of licenses sought for the particular SBS. Free download allows the user to receive the SBS without having to pay a fee.

The user can attach SBS data used to implement the SBS using SBS upload input field 550. For example, the SBS data can be an executable program module which allows access to SBS. In other embodiments, no SBS data is uploaded. In this embodiment, once an SBS is purchased service development platform 200 generates a unique transaction number which it provides to the purchaser of and to the provider of the SBS. The purchaser can then use the transaction number to receive service from the SBS provider.

Additionally, in some embodiments not shown SBS upload GUI 500 includes a documentation input field. The documentation input field allows a user to upload documents associated with the SBS to be uploaded. Documentation can be information relating to the proper use of the SBS, compatibility with other SBSs, de-bugging information, license information, etc.

The user completes the upload by selecting submit button 555. After submit button 555 is selected, interface module 210 displays to the user an upload checkout GUI (not shown) that allows the user to confirm the SBS to be uploaded and provide other information potentially needed to complete the transaction. In some embodiments, the upload checkout GUI also asks the user for licensing information. For example, each of the payment options selected by the user can have a unique license associated with it conditioning the use of the SBS to the terms of the license. Additionally, the upload checkout GUI can be configured to ask the user to agree to a set of license and terms associated with selling their SBS using service distribution platform 200. In some embodiments, the license and terms can be structured such that the user agrees to pay a certain percentage of each sale to a particular entity. For example, the service distribution platform 200 can condition uploading an SBS on a 10% cut of every sale made using service distribution platform 200.

Referring back to **Figure 2****,** interface module 210 can be coupled to catalog module 220, billing module 230, communication module 240, and data storage module 250.

Catalog module 220 is configured to analyze and parse information obtained from SBS upload GUI 500 to associate the SBS being uploaded with one or more categories and subcategories in the SBS catalog. A specific category -subcategory combination references a particular location within the SBS catalog. The SBS catalog is a searchable collection of SBSs compiled by service development platform 200. The SBSs within the SBS catalog can be indexed by, for example, platform, type of SBS service, title, SBS provider, price, license associated with the SBS, ranking, recommended SBSs, related SBSs, etc. In some embodiments, catalog module 220 parses information in one or more of the input fields of SBS upload GUI 500 to determine the correct placement of the uploaded SBS within the SBS catalog. For example, catalog module 220 can be configured to analyze the parsed information for words and phrases like "weather," "GPS," "storm," "can be used with .NET platform or J2EE," etc. Additionally, catalog module 220 can be further configured to compare the parsed information with the information entered into suggested catalog location input field 512 to determine if the user's suggested placement within the SBS catalog is correct. For example, each catalog location can have certain terms and phrases associated with it more frequently than others. Catalog module 220 can be configured to compare the parsed information with terms and phrases associated with different locations within the SBS catalog, and determine one or more locations based on the similarity of the terms and phrases. In some embodiments, catalog module 220 can be configured to compare the determined one or more SBS catalog locations with any catalog locations suggested by the user. In some embodiments, if the similarity between the determined and suggested locations are below a predetermined threshold, catalog module 220 can be configured to override one or more of the user's suggested SBS catalog locations and index the uploaded SBS data with one or more of the determined SBS catalog locations. After the SBS catalog location has been confirmed, catalog module 220 is configured to store the uploaded SBS, using for example, data storage module 250. Catalog module 220 can be coupled to interface module 210, billing module 230, communication module 240, and data storage module 250.

Billing module 230 is configured to monitor accounts for one or more users of service development platform 200. After a user purchases an SBS, billing module 230 is configured to determine what percentage of the purchase price is received by an entity controlling service development platform 200 and what percentage of the purchase price is directed toward the SBS provider. Billing module 230 is configured to determine the fee split between the hosting entity and the SBS provider by referencing the conditions agreed to the SBS provider when the particular SBS service was uploaded to service development platform 200. The fee split can be determined in any number of ways. For example, the SBS provider could have agreed to provide the hosting entity with 20% of any sale of the uploaded SBS using service development platform 200. Billing module 230 is configured to communicate with one or more financial service providers (for example, financial service providers 130 and 140) to complete the purchase process. For example, the fee paid by a user purchasing a particular SBS can be 100 dollars. Billing module 230 would then coordinate (via communication module 240) with the one or more financial service providers such that the entity controlling server development platform 200 receives 20 dollars (20 % of total price) and the SBS provider receives the remaining 80 dollars. Additionally, in some embodiments, billing module 230 merely maintains a running tally of downloads of the SBS and bills the SBS provider periodically (for example, daily, monthly, annually, etc.) for the amount of fees incurred over the specified time period. Additionally, billing module 230 can be configured to notify communication module 250 that one or more charges for a SBS have cleared and authorize communications module 240 to provide the SBS to the purchaser (for example, user of the client device) of the SBS. Billing module 230 can be coupled to interface module 210, catalog module 220, communication module 240, and data storage module 250.

Communication module 240 is configured to communicate with one or more client devices (for example, client devices 150, 160, and 170). For example, communication module 240 is configured to allow a user of a remote client device to login into service development platform 200 (for example, using service distribution GUI 300), upload an SBS into service distribution platform 200, purchase an SBS, or some combination thereof. Additionally, communication module 240 is configured to allow communication between service development platform 200 and one or more financial service providers (for example, 130 and 140). In some embodiments, communication module 240 is configured to generate a unique transaction identifier after an SBS has been authorized to be provided to the purchaser of the SBS. The transaction identifier can be, for example, a unique alphanumeric string of characters that are associated with the transaction. Communication module 240 can be further configured to provide the transaction identifier to the client device and one or more SBS providers. The client device can then provide the transaction number to the SBS provider of the purchased SBS. The user can then use the transaction identifier to receive service from one or more of the SBS providers. In some embodiments, each SBS has a unique transaction identifier. While in other embodiments, the transaction number is associated with one or more of the purchased SBSs. Communication module 240 can be coupled to interface module 210, catalog module 220, billing module 230, and data storage module 250.

Data storage module 250 includes a database, one or more computer files in a directory structure, or any other appropriate data storage mechanism, such as a memory. Data storage module 250 stores, for example, user profile information, one or more SBSs, descriptive information relating to stored SBSs, an SBS catalog, billing information, etc. User profile information can include, for example, name, place of employment, work phone number, home address, billing preference, identities of SBS uploaded into service distribution platform 200, etc. One or more SBSs are stored in data storage module 250 and are indexed in a searchable SBS catalog. Additionally, each of the stored one or more SBSs can include associated descriptive information. For example, SBS name, icon, SBS description, recommended SBS, related SBS, etc., as discussed above in reference to **Figures 4** and **5****.** In some example embodiments, data storage module 250 is distributed across one or more network servers. Data storage module 250 can be coupled to interface module 210, catalog module 220, billing module 230, and communication module 240.

Each of modules 210, 220, 230, and 240 can be software programs stored in a RAM, a ROM, a PROM, a FPROM, or other dynamic storage devices, or persistent memory for storing information and instructions.

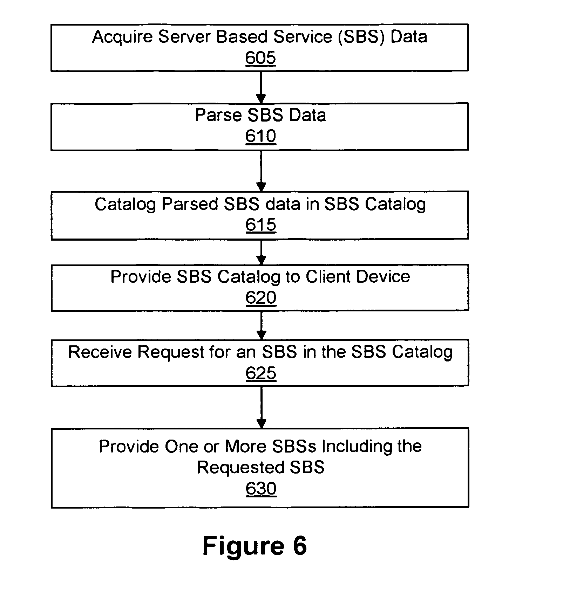

**Figure 6** is a flowchart representing an example method performed on a service development platform for developing, distributing, and monetizing one or more SBSs. While the flowchart discloses the following steps in a particular order, it is appreciated that at least some of the steps can be moved, modified, or deleted where appropriate.

In step 605, SBS data is acquired. SBS data can include an SBS name, one or more key words, a suggested SBS catalog location, an SBS provider name, an SBS icon, an SBS description, one or more recommended SBSs, one or more related SBSs, distribution platform information, purchase options, SBS documentation, an SBS program, or some combination thereof. The SBS data can be acquired when a client device uploads SBS data to one or more servers hosting the service development platform. In some embodiments, the data can be uploaded using one or more GUIs, for example, SBS upload GUI 500.

In step 610, the acquired SBS data is parsed and in step 615 the parsed SBS data is cataloged in an SBS catalog. The SBS catalog is a searchable collection of SBSs compiled by the service development platform. The SBSs within the SBS catalog can be indexed, for example, by platform, by type of SBS service, by title, by SBS provider, by price, by license associated with the SBS, by ranking, by recommended SBSs, by related SBSs, etc. The service development platform analyzes the parsed information for words and phrases like "weather," "GPS," "storm," "can be used with .Net platform or J2EE," etc. A specific category -subcategory combination references a particular location within the SBS catalog. The service development platform compares the parsed SBS data with terms and phrases associated with different categories and subcategories within the SBS catalog. The service development platform determines one or more locations to associate the SBS based on the similarity of the terms and phrases with the parsed SBS data. In some embodiments, the service development platform compares the parsed information with any suggested SBS catalog locations to determine if one or more of the suggested locations are correct. For example, each SBS catalog location can have certain terms and phrases associated with it more frequently than others. In some embodiments, if the similarity between one or more of the determined and suggested locations are below a predetermined threshold the service development platform overrides one or more of the suggested SBS catalog locations and indexes the acquired SBS data in one or more of the determined SBS catalog locations.

In step 620, the service development platform provides the SBS catalog to a client device. The SBS catalog can be provided in the form of one or more GUIs, for example service distribution GUI 300. In step 625, a request is received for an SBS in the SBS catalog. For example, the client device can request a particular SBS for purchase using selected service distribution GUI 400. Additionally, in some embodiments, the user can also purchase one or more additional SBSs to concurrent with the requested SBS. In step 630, the service development platform provides the one or more SBSs including the requested SBS.

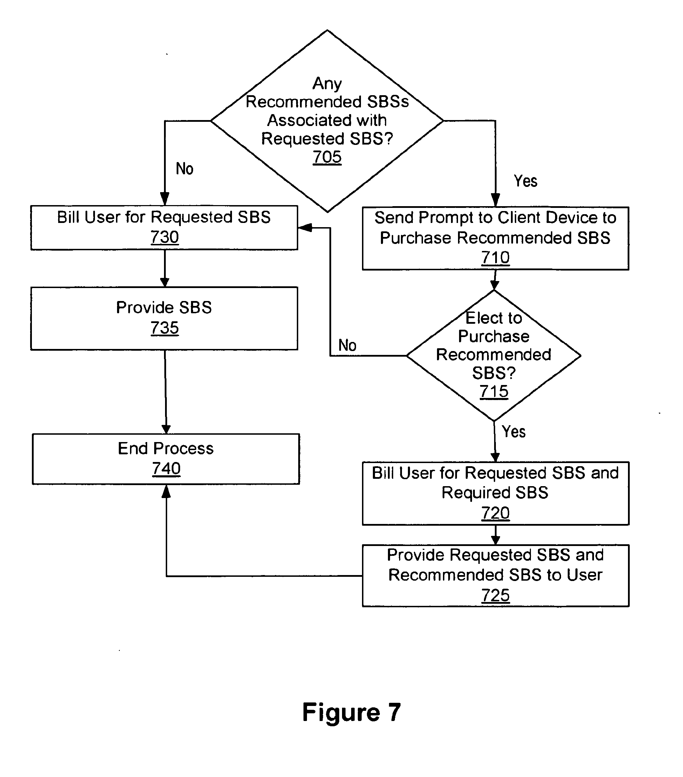

**Figure 7** is a flowchart representing an example method, performed on a service development platform, for providing one or more SBSs including the requested SBS to a client device. While the flowchart discloses the following steps in a particular order, it is appreciated that at least some of the steps can be moved, modified, or deleted where appropriate.

In step 705, the service development platform determines if there are any recommended SBSs associated with a requested SBS. If there are recommended SBSs, the service development system sends a prompt to the client device (step 710). The prompt asks the user of the client device if they wish to purchase any of the recommended SBSs as well as the requested SBS (step 715). If one or more of the recommended SBSs are to be purchased, then the service development system bills the user for the requested SBS and the one or more recommended SBSs elected for purchase (step 720). In step 725, the service development platform provides the purchased SBS and recommended SBSs to the user. For example, the service development platform can make available for download the SBS programs associated with the purchased SBS and the recommended SBSs. In some embodiments, the service development platform generates a unique transaction identifier that is provided to the purchaser of and to the provider of the purchased SBS. The transaction identifier can be for example, unique alphanumeric string of characters that are associated with the transaction. The purchaser can then use the transaction identifier to receive service from one or more SBS providers. In some embodiments, each SBS has a unique transaction identifier. While in other embodiments, the transaction identifier is associated with one or more of the purchased SBSs. The process then ends (step 740).

If the user does not elect to purchase any of the recommended SBSs or if there are no recommended SBSs associated with the selected SBS, in step 730, the service development platform bills the user for the requested SBS. The service development platform then provides the SBS to the user (step 735). For example, the service development platform can make available for download the SBS program associated with the purchased SBS. In some embodiments, the service development platform generates a unique transaction identifier that is provided to the purchaser of and to the provider of the purchased SBS. The purchaser can then use the transaction identifier to receive service from the SBS provider. The process then ends (step 740).

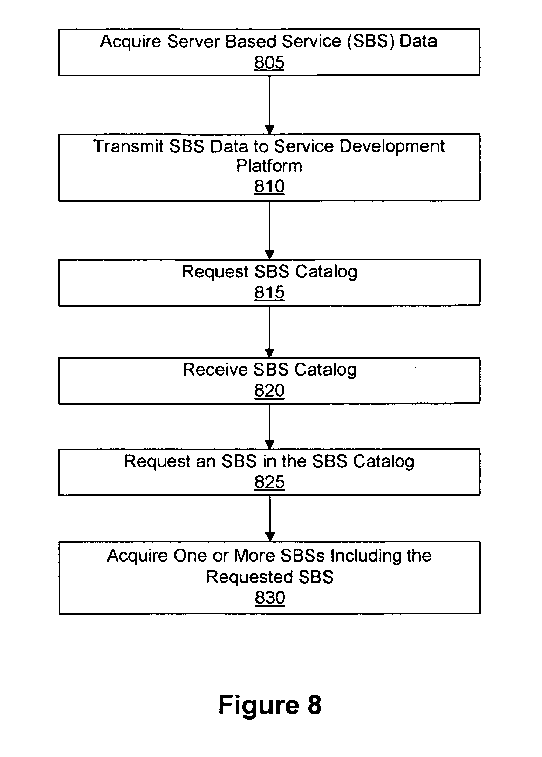

**Figure 8** is a flowchart representing an example method performed on a client device in communication with a service development platform for developing, distributing, and monetizing one or more SBSs. While the flowchart discloses the following steps in a particular order, it is appreciated that at least some of the steps can be moved, modified, or deleted where appropriate.

In step 805, SBS data is acquired. SBS data can include an SBS name, one or more key words, a suggested SBS catalog location, an SBS company name, an SBS icon, an SBS description, one or more recommended SBSs, one or more related SBSs, distribution platform information, purchase options, SBS documentation, an SBS program, or some combination thereof. For example, the SBS data can be acquired from a user of the client device. In some embodiments, the data can be acquired using one or more GUIs, for example, SBS upload GUI 500. In step 810, the acquired SBS data is transmitted to the service development platform.

In step 815, the client device requests an SBS catalog from the service development platform. The SBS catalog contains searchable data describing one or more SBSs indexed within the SBS catalog. In step 820, the client device receives the requested SBS catalog. The SBS catalog can be referenced by the client using one or more GUIs, for example, service distribution GUI 300 and selected service distribution GUI 400. For example, the user can search for particular services using one or more keywords, browse SBSs by catalog location, etc. In step 825, the client device requests that an SBS be provided from those SBSs listed in the SBS catalog. In some embodiments, client device requests the SBS using selected service distribution GUI 400. Additionally, in some embodiments, the user can also purchase one or more additional SBSs concurrent with the requested SBS. In step 830, the client device acquires one or more SBSs, including the requested SBS.

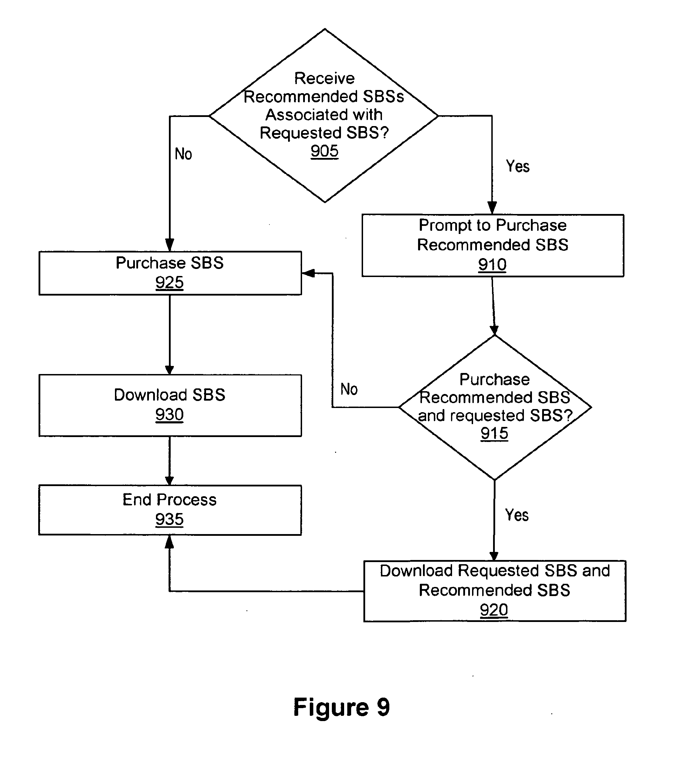

**Figure 9** is a flowchart representing an example method, performed on a client device, for acquiring one or more SBSs including the requested SBS. While the flowchart discloses the following steps in a particular order, it is appreciated that at least some of the steps can be moved, modified, or deleted where appropriate.

In step 905, the client device determines if the service development platform has identified one or more recommended SBSs. If there are recommended SBSs, the client device prompts the user to purchase one or more of the recommended SBSs (step 910). The prompt asks the user of the client device if they wish to purchase any of the recommended SBSs as well as the requested SBS. In step 915, the client device receives input from the user that determines whether the user wishes to purchase one or more of the recommended SBSs in addition to the requested SBS, or only the requested SBS.

If one or more of the recommended SBSs are purchased, in step 920, the client device downloads the requested SBS and one or more of the recommended SBSs. For example, the client device can download the SBS programs associated with the purchased SBS and the recommended SBSs. In some embodiments, the client device downloads a unique transaction identifier from the service development platform. The transaction identifier can be for example, unique alphanumeric string of characters that are associated with the transaction. The client device can then provide the transaction number to the SBS provider of the purchased SBS. The user can then use the transaction identifier to receive service from one or more of the SBS providers. In some embodiments, each SBS has a unique transaction identifier. While in other embodiments, the transaction number is associated with one or more of the purchased SBSs. The process then ends (step 935).

If the user does not elect to purchase any of the recommended SBSs or if there are no recommended SBSs associated with the selected SBS, in step 925, the client device facilitates the purchase of the requested SBS. In step 930, the client device downloads the requested SBS. For example, the client device can download the SBS programs associated with the purchased SBS service. In some embodiments, the client device downloads a unique transaction identifier from the service development platform. The client device can then provide the transaction identifier to the provider of the purchased SBS. The user can then use the transaction identifier to receive service from the SBS provider. The process then ends (step 935).

Certain adaptations and modifications of the described embodiments can be made. Therefore, the above discussed embodiments are considered to be illustrative and not restrictive.

Embodiments of the present application are not limited to any particular operating system, mobile device architecture, server architecture, or computer programming language.

## Claims

1. A method for providing a server-based service to an application developer, the method comprising:
acquiring server-based service data associated with a first server-based service;
parsing the server-based service data on a service development platform (200);
cataloging the parsed server-based service data into a server-based service catalog that contains one or more server-based services different from the first server-based service, the catalog being a searchable collection of server-based services compiled by the service development platform (200);
receiving a request from a client device of the application developer (160) for the first server-based service indexed in the server-based service catalog; and
providing the first server-based service to the client device of the application developer based on server-based service data referenced in the server-based service catalog.

2. The method of claim 1, wherein the provided first server-based service can be utilized by an application running on a mobile device.

3. The method of claim 1 or 2, further comprising:
determining if one or more recommended server-based services (430) are associated with the first server-based service;
sending a prompt to the client device based on the determination; and
providing one or more of the recommended server-based services to the client device.

4. The method of any preceding claim, wherein providing the first server-based service to the client device includes:
generating a secure transaction identifier;
providing the secure transaction identifier to the client device of the application developer; and
providing the secure transaction identifier to a server-based service provider (415) associated with the first server-based service.

5. The method of any preceding claim, wherein cataloging the parsed server-based service data into a server-based service catalog includes:
comparing the parsed server-based service data with terms and phrases associated with categories in the server-based service catalog; and
determining a first server-based service category in the server-based service catalog based on the comparison between the parsed server-based service data and the terms and phrases associated with the categories in the server-based service catalog.

6. The method of any preceding claim, further comprising providing the server-based service catalog to the client device, wherein the server-based service catalog includes the first server-based service for selection, and the one or more server-based services different from the first server-based service are available for selection.

7. A system configured to provide a server-based service to an application developer, the system comprising:
an interface module (210) configured to acquire server-based service data associated with a first server-based service;
a catalog module (220) configured to:
parse the server-based service data on a service development platform (200), and
catalog the parsed server-based service data into a server-based service catalog that contains one or more server-based services different from the first server-based service, the catalog being a searchable collection of server-based services compiled by the service development platform (200); wherein the interface module is further configured to receive a request from a client device of the application developer (160) for the first server-based service indexed in the server-based service catalog; and
a communication module (240) configured to provide the first server-based service to the client device of the application developer based on server-based service data referenced in the server-based service catalog.

8. The system of claim 7, wherein the provided first server-based service can be utilized by an application running on a mobile device.

9. The system of claim 7 or 8, wherein
the interface module is further configured to:
determine if one or more recommended server-based services (430) are associated with the first server-based service, and
send a prompt to the client device based on the determination; and the communication module is further configured to:
provide one or more of the recommended server-based services to the client device.

10. The system of any one of claims 7 to 9, wherein the communication module is further configured to:
generate a secure transaction identifier;
provide the secure transaction identifier to the client device of the application developer; and
provide the secure transaction identifier to a server-based service provider (415) associated with the first server-based service.

11. The system of any one of claims 7 to 10, wherein the catalog module is further configured to:
compare the parsed server-based service data with terms and phrases associated with categories in the server-based service catalog; and
determine a first server-based service category in the server-based service catalog based on the comparison between the parsed server-based service data and the terms and phrases associated with the categories in the server-based service catalog.

12. The system of any one of claims 7 to 11, wherein the interface module is further configured to provide the SBS catalog to the client device, wherein the SBS catalog includes the first server-based service for selection, and the one or more server-based services different from the first server-based service are available for selection.

13. A non-transitory computer-readable storage medium storing instructions that, when executed by a service development platform (200), cause the service development platform to perform a method for providing a server-based service to an application developer, the method comprising:
acquiring server-based service data associated with a first server-based service;
parsing the server-based service data on a service development platform (200);
cataloging the parsed server-based service data into a server-based service catalog that contains one or more server-based services different from the first server-based service, the catalog being a searchable collection of server-based services compiled by the service development platform (200);
receiving a request from a client device of the application developer (160) for the first server-based service indexed in the server-based service catalog; and
providing the first server-based service to the client device of the application developer based on server-based service data referenced in the server-based service catalog.

14. The computer readable medium of claim 13, wherein the provided first server-based service can be utilized by an application running on a mobile device.

## Patentansprüche

1. Ein Verfahren zum Vorsehen eines Server-basierten Dienstes für einen Anwendungsentwickler, wobei das Verfahren aufweist:
Akquirieren von "Server-basierter Dienst"-Daten, die mit einem ersten Server-basierten Dienst assoziiert sind;
Analysieren der "Server-basierter Dienst"-Daten auf einer Dienst-Entwicklungsplattform (200);
Katalogisieren der analysierten "Server-basierter Dienst"-Daten in einen "Server-basierter Dienst"-Katalog, der einen oder mehrere Server-basierte(n) Dienst(e), verschieden von dem ersten Server-basierten Dienst, enthält, wobei der Katalog eine durchsuchbare Sammlung von Server-basierten Diensten ist, die von der Dienst-Entwicklungsplattform (200) kompiliert wird;
Empfangen einer Anforderung von einer Client-Vorrichtung (160) des Anwendungsentwicklers für den ersten Server-basierten Dienst, der in dem "Server-basierter Dienst"-Katalog indiziert ist; und
Vorsehen des ersten Server-basierten Dienstes an die Client-Vorrichtung des Anwendungsentwicklers basierend auf "Server-basierter Dienst"-Daten, die in dem "Server-basierter Dienst"-Katalog referenziert werden.

2. Das Verfahren gemäß Anspruch 1, wobei der vorgesehene erste Server-basierte Dienst durch eine Anwendung verwendet werden kann, die auf einer mobilen Vorrichtung läuft.

3. Das Verfahren gemäß Anspruch 1 oder 2, das weiter aufweist:
Bestimmen, ob ein oder mehrere empfohlene(r) Server-basierte(r) Dienst(e) (430) mit dem ersten Server-basierten Dienst assoziiert ist/sind;
Senden einer Aufforderung an die Client-Vorrichtung basierend auf der Bestimmung; und
Vorsehen eines oder mehrerer der empfohlenen Server-basierten Dienste für die Client-Vorrichtung.

4. Das Verfahren gemäß einem vorhergehenden Anspruch, wobei das Vorsehen des ersten Server-basierten Dienstes für die Client-Vorrichtung umfasst:
Erzeugen eines sicheren Transaktionsidentifizierers;
Vorsehen des sicheren Transaktionsidentifizierers für die Client-Vorrichtung des Anwendungsentwicklers; und
Vorsehen des sicheren Transaktionsidentifizierers für einen "Server-basierter Dienst"-Anbieter (415), der mit dem ersten Server-basierten Dienst assoziiert ist.

5. Das Verfahren gemäß einem vorhergehenden Anspruch, wobei das Katalogisieren der analysierten "Server-basierter Dienst"-Daten in einen "Server-basierter Dienst"-Katalog umfasst:
Vergleichen der analysierten "Server-basierter Dienst"-Daten mit Begriffen und Phrasen, die mit Kategorien in dem "Server-basierter Dienst"-Katalog assoziiert sind; und
Bestimmen einer ersten "Server-basierter Dienst"-Kategorie in dem "Server-basierter Dienst"-Katalog basierend auf dem Vergleich zwischen den analysierten "Server-basierter Dienst"-Daten und den Begriffen und Phrasen, die mit den Kategorien in dem "Server-basierter Dienst"-Katalog assoziiert sind.

6. Das Verfahren gemäß einem vorhergehenden Anspruch, das weiter aufweist ein Vorsehen des "Server-basierter Dienst"-Katalogs für die Client-Vorrichtung, wobei der "Server-basierter Dienst"-Katalog den ersten Server-basierten Dienst zur Auswahl umfasst, und der eine oder mehrere Server-basierte Dienst(e), verschieden von dem ersten Server-basierten Dienst, zur Auswahl verfügbar ist/sind.

7. Ein System, das konfiguriert ist zum Vorsehen eines Server-basierten Dienstes für einen Anwendungsentwickler, wobei das System aufweist:
ein Schnittstellenmodul (210), das konfiguriert ist zum Akquirieren von "Server-basierter Dienst"-Daten, die mit einem ersten Server-basierten Dienst assoziiert sind;
ein Katalogmodul (220), das konfiguriert ist zum:
Analysieren der "Server-basierter Dienst"-Daten auf einer Dienst-Entwicklungsplattform (200); und
Katalogisieren der analysierten "Server-basierter Dienst"-Daten in einen "Server-basierter Dienst"-Katalog, der einen oder mehrere Server-basierte(n) Dienst(e), verschieden von dem ersten Server-basierten Dienst, enthält, wobei der Katalog eine durchsuchbare Sammlung von Server-basierten Diensten ist, die von der Dienst-Entwicklungsplattform (200) kompiliert wird; wobei das Schnittstellenmodul weiter konfiguriert ist zum Empfangen einer Anforderung von einer Client-Vorrichtung (160) des Anwendungsentwicklers für den ersten Server-basierten Dienst, der in dem "Server-basierter
Dienst"-Katalog indiziert ist; und
ein Kommunikationsmodul (240), das konfiguriert ist zum Vorsehen des ersten Server-basierten Dienstes an die Client-Vorrichtung des Anwendungsentwicklers basierend auf "Server-basierter Dienst"-Daten, die in dem "Server-basierter Dienst"-Katalog referenziert werden.

8. Das System gemäß Anspruch 7, wobei der vorgesehene erste Server-basierte Dienst durch eine Anwendung verwendet werden kann, die auf einer mobilen Vorrichtung läuft.

9. Das System gemäß Anspruch 7 oder 8, wobei das Schnittstellenmodul weiter konfiguriert ist zum:
Bestimmen, ob ein oder mehrere empfohlene(r) Server-basierte(r) Dienst(e) (430) mit dem ersten Server-basierten Dienst assoziiert ist/sind; und
Senden einer Aufforderung an die Client-Vorrichtung basierend auf der Bestimmung; und
das Kommunikationsmodul weiter konfiguriert ist zum:
Vorsehen eines oder mehrerer der empfohlenen Server-basierten Dienste für die Client-Vorrichtung.

10. Das System gemäß einem der Ansprüche 7 bis 9, wobei das Kommunikationsmodul weiter konfiguriert ist zum:
Erzeugen eines sicheren Transaktionsidentifizierers;
Vorsehen des sicheren Transaktionsidentifizierers für die Client-Vorrichtung des Anwendungsentwicklers; und
Vorsehen des sicheren Transaktionsidentifizierers für einen "Server-basierter Dienst"-Anbieter (415), der mit dem ersten Server-basierten Dienst assoziiert ist.

11. Das System gemäß einem der Ansprüche 7 bis 10, wobei das Katalogmodul weiter konfiguriert ist zum:
Vergleichen der analysierten "Server-basierter Dienst"-Daten mit Begriffen und Phrasen, die mit Kategorien in dem "Server-basierter Dienst"-Katalog assoziiert sind; und
Bestimmen einer ersten "Server-basierter Dienst"-Kategorie in dem "Server-basierter Dienst"-Katalog basierend auf dem Vergleich zwischen den analysierten "Server-basierter Dienst"-Daten und den Begriffen und Phrasen, die mit den Kategorien in dem "Server-basierter Dienst"-Katalog assoziiert sind.

12. Das System gemäß einem der Ansprüche 7 bis 11, wobei das Schnittstellenmodul weiter konfiguriert ist zum Vorsehen des "Server-basierter Dienst"-Katalogs für die Client-Vorrichtung, wobei der "Server-basierter Dienst"-Katalog den ersten Server-basierten Dienst zur Auswahl umfasst, und der eine oder mehrere Server-basierte Dienst(e), verschieden von dem ersten Server-basierten Dienst, zur Auswahl verfügbar ist/sind.

13. Ein nicht-transitorisches computerlesbares Speichermedium zum Speichern von Anweisungen, die bei Ausführung durch eine DienstEntwicklungsplattform (200) die Dienst-Entwicklungsplattform veranlassen, ein Verfahren zum Vorsehen eines Server-basierten Dienstes für einen Anwendungsentwickler durchzuführen, wobei das Verfahren aufweist:
Akquirieren von "Server-basierter Dienst"-Daten, die mit einem ersten Server-basierten Dienst assoziiert sind;
Analysieren der "Server-basierter Dienst"-Daten auf einer DienstEntwicklungsplattform (200);
Katalogisieren der analysierten "Server-basierter Dienst"-Daten in einen "Server-basierter Dienst"-Katalog, der einen oder mehrere Server-basierte(n) Dienst(e), verschieden von dem ersten Server-basierten Dienst, enthält, wobei der Katalog eine durchsuchbare Sammlung von Server-basierten Diensten ist, die von der Dienst-Entwicklungsplattform (200) kompiliert wird;
Empfangen einer Anforderung von einer Client-Vorrichtung (160) des Anwendungsentwicklers für den ersten Server-basierten Dienst, der in dem "Server-basierter Dienst"-Katalog indiziert ist; und
Vorsehen des ersten Server-basierten Dienstes an die Client-Vorrichtung des Anwendungsentwicklers basierend auf "Server-basierter Dienst"-Daten, die in dem "Server-basierter Dienst"-Katalog referenziert werden.

14. Das computerlesbare Medium gemäß Anspruch 13, wobei der vorgesehene erste Server-basierte Dienst durch eine Anwendung verwendet werden kann, die auf einer mobilen Vorrichtung läuft.

## Revendications

1. Procédé pour fournir un service basé sur un serveur à un développeur d'applications, le procédé comprenant le fait :
d'acquérir des données de service basé sur un serveur associées à un premier service basé sur un serveur ;
d'analyser les données de service basé sur un serveur sur une plateforme de développement de services (200) ;
de cataloguer les données analysées de service basé sur un serveur dans un catalogue de services basés sur un serveur qui contient un ou plusieurs service(s) basé(s) sur un serveur différent(s) du premier service basé sur un serveur, le catalogue étant une collection consultable de services basés sur un serveur compilés par la plateforme de développement de services (200) ;
de recevoir une demande d'un dispositif client (160) du développeur d'applications pour le premier service basé sur un serveur indexé dans le catalogue de services basés sur un serveur ; et
de fournir le premier service basé sur un serveur au dispositif client du développeur d'applications sur la base de données de service basé sur un serveur référencées dans le catalogue de services basés sur un serveur.

2. Procédé de la revendication 1, dans lequel le premier service basé sur un serveur fourni peut être utilisé par une application exécutée sur un dispositif mobile.

3. Procédé de la revendication 1 ou 2, comprenant en outre le fait :
de déterminer si un ou plusieurs service(s) recommandé(s) basé(s) sur un serveur (430) est/sont associé(s) au premier service basé sur un serveur ;
d'envoyer une invite au dispositif client sur la base de la détermination ; et
de fournir un ou plusieurs des services recommandés basés sur un serveur au dispositif client.

4. Procédé de l'une des revendications précédentes, dans lequel le fait de fournir le premier service basé sur un serveur au dispositif client comprend le fait :
de générer un identifiant de transaction sécurisée ;
de fournir l'identifiant de transaction sécurisée au dispositif client du développeur d'applications ; et
de fournir l'identifiant de transaction sécurisée à un fournisseur de service basé sur un serveur (415) associé au premier service basé sur un serveur.

5. Procédé de l'une des revendications précédentes, dans lequel le fait de cataloguer les données analysées de service basé sur un serveur dans un catalogue de services basés sur un serveur comporte le fait :
de comparer les données analysées de service basé sur un serveur aux termes et expressions associés à des catégories dans le catalogue de services basés sur un serveur ; et
de déterminer une première catégorie de service basé sur un serveur dans le catalogue de services basés sur un serveur sur la base de la comparaison entre les données analysées de service basé sur un serveur et les termes et expressions associés aux catégories dans le catalogue de services basés sur un serveur.

6. Procédé de l'une des revendications précédentes, comprenant en outre le fait de fournir le catalogue de services basés sur un serveur au dispositif client, dans lequel le catalogue de services basés sur un serveur comporte le premier service basé sur un serveur pour la sélection, et le ou les service(s) basé(s) sur un serveur différent(s) du premier service basé sur un serveur est/sont disponible(s) pour la sélection.

7. Système configuré pour fournir un service basé sur un serveur à un développeur d'applications, le système comprenant :
un module d'interface (210) configuré pour acquérir des données de service basé sur un serveur associées à un premier service basé sur un serveur ;
un module de catalogue (220) configuré :
pour analyser les données de service basé sur un serveur sur une plateforme de développement de services (200), et
pour cataloguer les données analysées de service basé sur un serveur dans un catalogue de services basés sur un serveur qui contient un ou plusieurs service(s) basé(s) sur un serveur différent(s) du premier service basé sur un serveur, le catalogue étant une collection consultable de services basés sur un serveur compilés par la plateforme de développement de services (200) ; où le module d'interface est en outre configuré pour recevoir une demande d'un dispositif client (160) du développeur d'applications pour le premier service basé sur un serveur indexé dans le catalogue de services basés sur un serveur ; et
un module de communication (240) configuré pour fournir le premier service basé sur un serveur au dispositif client du développeur d'applications sur la base de données de services basés sur un serveur référencées dans le catalogue de services basés sur un serveur.

8. Système de la revendication 7, dans lequel le premier service basé sur un serveur fourni peut être utilisé par une application exécutée sur un dispositif mobile.

9. Système de la revendication 7 ou 8, dans lequel le module d'interface est en outre configuré :
pour déterminer si un ou plusieurs service(s) recommandé(s) basé(s) sur un serveur (430) est/sont associé(s) au premier service basé sur un serveur, et
pour envoyer une invite au dispositif client sur la base de la détermination ; et le module de communication est en outre configuré :
pour fournir un ou plusieurs des services recommandés basés sur un serveur au dispositif client.

10. Système de l'une quelconque des revendications 7 à 9, dans lequel le module de communication est en outre configuré :
pour générer un identifiant de transaction sécurisée ;
pour fournir l'identifiant de transaction sécurisée au dispositif client du développeur d'applications ; et
pour fournir l'identifiant de transaction sécurisée à un fournisseur de service basé sur un serveur (415) associé au premier service basé sur un serveur.

11. Système de l'une quelconque des revendications 7 à 10, dans lequel le module de catalogue est en outre configuré :
pour comparer les données analysées de service basé sur un serveur aux termes et expressions associés à des catégories dans le catalogue de services basés sur un serveur ; et
pour déterminer une première catégorie de service basé sur un serveur dans le catalogue de services basés sur un serveur sur la base de la comparaison entre les données analysées de service basé sur un serveur et les termes et expressions associés aux catégories dans le catalogue de services basés sur un serveur.

12. Système de l'une quelconque des revendications 7 à 11, dans lequel le module d'interface est en outre configuré pour fournir le catalogue de SBS au dispositif client, dans lequel le catalogue de SBS comporte le premier service basé sur un serveur pour la sélection, et le ou les service(s) basé(s) sur un serveur différent(s) du premier service basé sur un serveur est/sont disponible(s) pour la sélection.

13. Support de stockage non transitoire lisible par ordinateur stockant des instructions qui, lorsqu'elles sont exécutées par une plateforme de développement de services (200), amènent la plateforme de développement de services à mettre en oeuvre un procédé pour fournir un service basé sur un serveur à un développeur d'applications, le procédé comprenant le fait :
d'acquérir des données de service basé sur un serveur associées à un premier service basé sur un serveur ;
d'analyser les données de service basé sur un serveur sur une plateforme de développement de services (200) ;
de cataloguer les données analysées de service basé sur un serveur dans un catalogue de services basés sur un serveur qui contient un ou plusieurs service(s) basé(s) sur un serveur différent(s) du premier service basé sur un serveur, le catalogue étant une collection consultable de services compilés par la plateforme de développement de services (200) ;
de recevoir une demande d'un dispositif client (160) du développeur d'applications pour le premier service basé sur un serveur indexé dans le catalogue de services basés sur le serveur ; et
de fournir le premier service basé sur un serveur au dispositif client du développeur d'applications sur la base de données de service basé su serveur référencées dans le catalogue de services basés sur un serveur.

14. Support lisible par ordinateur de la revendication 13, dans lequel le premier service basé sur un serveur fourni peut être utilisé par une application exécutée sur un dispositif mobile.
